# EUROPEAN PATENT APPLICATION

(11) **EP 3 115 500 A1**
(43) Date of publication of application: **11.01.2017**
(21) Application number: 15176343.0
(22) Date of filing: 10.07.2015
(51) Int. Cl.: D06F 58/20, C09K 5/04

(54) **HOUSEHOLD APPLIANCE FOR DRYING ARTICLES**

(71) Applicant: Electrolux Appliances Aktiebolag, 105 45 Stockholm (SE)
(72) Inventor: BELLOMARE, Filippo, 33080 Porcia (PN) (IT); DALLA ROSA, Alessandro, 33080 Porcia (PN) (IT)
(74) Representative: Electrolux Group Patents

(57) **Abstract**

Household appliance (1) for drying laundry, comprising a heat pump system (5), the heat pump system comprising a refrigerant loop, said appliance comprising
- a laundry treatment chamber (2) for drying laundry using air as a drying medium (4);
- a first heat exchanger which is built as an evaporator (6) comprising an evaporator outlet (9) for heating a refrigerant and cooling the drying medium;
- a second heat exchanger which is built as a condenser (7) for cooling said refrigerant and heating the drying medium;
- an refrigerant expansion device (14) arranged in said refrigerant loop between said second heat exchanger and said first heat exchanger and
- a compressor (8) comprising a compressor outlet (11) arranged in said refrigerant loop between said first heat exchanger and said second heat exchanger, wherein said refrigerant is a blend of 1,1,1,2-Tetrafluoroethane and 1,3,3,3-Tetrafluro-1-propene and that the temperature of the drying air at said condenser outlet is between 50-75°C and that the temperature of the drying air at said evaporator outlet (9) is between 25-45°C.

## Description

### Field of the invention

The present invention relates to household appliances for drying articles. In particular, it relates to household appliances for drying laundry such as laundry dryers and combined laundry washers/dryers.

### Overview of the related art

Appliances for drying laundry such as laundry dryers, especially tumble dryers and washers/dryers, generally comprise a drying chamber for accommodating therein the laundry to be dried. A heated and dehumidified drying medium, typically air, is guided through the drying chamber. Upon passing through the drying chamber and laundry, the heated and dehumidified drying medium takes up humidity and at the same time cools down. The drying medium then exits at the drying chamber, thereby discharging humidity from the drying chamber and the laundry. The EP 2 690 213 A1 discloses a heat pump laundry dryer with a refrigerant loop.

In order to improve the energy efficiency of such appliances, it is known to use heat pumps. Heat pumps have been recognized as an attractive technology which can lead to significant energy saving compared to traditional systems such as electrically or hot tap water heated tumbled dryers. By use of a heat pump, residual heat from the drying medium exiting the drying chamber can be extracted therefrom and transferred again to the drying medium before it re-enters the drying chamber.

Heat pumps generally operate with refrigerants and working fluids. The choice of the refrigerant to be used in a heat pump drying appliance directly affects the performance of the appliance in terms of energy consumption, drying cycle time and environmental impact.

The refrigerant is typically circulated in a refrigerant loop of the heat pump with two heat exchangers of which one is used to cool down the drying medium coming from the drying chamber to extract water from it and the other one is used to heat up again the drying medium before it reenters the drying chamber. In order to heat up again the refrigerant, between these two heat exchangers a compressor is typically provided. This compressor is subject to two different pressures: a high pressure at the compressor outlet and the attached inlet of the capillary tube and a low working pressure at the inlet of the compressor. The pressure difference of these two pressures present in the compressor puts stress and strain on the mechanical parts of the compressor and is an important factor determining its lifetime. A typical refrigerant used in laundry dryers is 1,1,1,2-Tetrafluoroethane or R134a.

The aim of the invention is therefore to reduce the stress on the components of the refrigerating circuit without a simultaneous reduction of the drying performance in terms of a reduced drying temperature at the outlet of the compressor or an increase of drying time.

### Summary of the invention

According to the present invention, a household appliance for drying laundry is provided, comprising a heat pump system, the heat pump system comprising a refrigerant loop, the appliance comprising
- a laundry treatment chamber for drying laundry using air as a drying medium;
- a first heat exchanger which is built as an evaporator comprising an evaporator outlet for heating a refrigerant and cooling the drying medium;
- a second heat exchanger which is built as a condenser for cooling the refrigerant and heating the drying medium;
- an refrigerant expansion device arranged in the refrigerant loop between the second heat exchanger and the first heat exchanger and
- a compressor comprising a compressor outlet arranged in the refrigerant loop between the first heat exchanger and the second heat exchanger, wherein
the refrigerant is a blend of 1,1,1,2-Tetrafluoroethane and 1,3,3,3-Tetrafluro-1-propene and that the temperature of the drying air at the condenser outlet is between 50-75°C and that the temperature of the drying air at the evaporator outlet is between 25-45°C.

The invention is based on the consideration that the lifetime is an important criterion of modern household appliances. With respect to the heat pump components, the pressure difference acting on the compressor puts stress on its mechanical parts and can over time lead to damaged components. It would therefore be desirable to have a refrigerant available which during the drying process allows using a reduced pressure difference at the compressor.

The applicant has found that a refrigerant which is a blend of 1,1,1,2-Tetrafluoroethane and 1,3,3,3-Tetrafluro-1-propene, hereafter also called the blended refrigerant, leads to the desired result. Hence by blending the known refrigerant R134a with 1,3,3,3-Tetrafluro-1-propene, a high drying efficiency can be obtained while reducing the component stress in the heat pump system.

The temperature of the drying air at the condenser outlet is preferably between 55-65°C. The temperature of the drying air at the evaporator outlet is preferably between 25-35°C.

In a preferred embodiment, the refrigerant has a percentage between 37 % and 47 % of 1,1,1,2-Tetrafluoroethane and a corresponding percentage between 63 % and 53 % of 1,3,3,3-Tetrafluro-1-propene.

In an especially preferred embodiment, the refrigerant has a percentage of 42 % of 1,1,1,2-Tetrafluoroethane and a percentage of 58 % of 1,3,3,3-Tetrafluro-1-propene.

Preferably, the refrigerant has a glide between 0.5°C and 1 °C at a bubble temperature between 18 °C and 22 °C and a glide between 0.5°C and 1 °C at a bubble temperature between 58 °C and 62 °C.

More preferably, the refrigerant has a glide of 0,787 °C at a bubble temperature between 18 °C and 22 °C and a glide of 0,688 °C at a bubble temperature between 58 °C and 62 °C.

Advantageously, the refrigerant has a glide of 0,787 °C at a bubble temperature of 20 °C and a glide of 0,688 °C at a bubble temperature of 60 °C.

The refrigerant preferably has a critical temperature between 97 °C and 107 °C.

The refrigerant preferably has a critical temperature of 102 °C.

Advantageously, the refrigerant has a critical pressure between 35 bar and 41 bar.

Advantageously, the refrigerant has a critical pressure of 38 bar.

Preferably, the refrigerant has a nominal boiling point between -24°C and -29 °C.

In an especially preferred variant, the refrigerant has a nominal boiling point of essentially - 24,9 °C.

Preferably, the refrigerant has a heat of vaporization at its nominal boiling point between 150 kJ/kg and 250 kJ/kg.

Especially preferred, the refrigerant has a heat of vaporization at its nominal boiling point of essentially 202,8 kJ/kg.

In a preferred embodiment, the household appliance comprises a closed-loop circuit wherein the drying medium circulates.

Preferably the household appliance is built as a combined washer/dryer or dryer. In a preferred embodiment, the household appliance is built as a tumble dryer.

The advantages of the invention are especially as follows. By employing the blended refrigerant in a dryer, the stress and strain on components of the heat pump, especially the compressor, are reduced, increasing their lifetime. Production and material costs can be saved by downsizing the compressor while still essentially maintaining the desired drying performance.

### Brief description of the drawings

Further characteristics and advantages of the present invention will be highlighted in greater detail in the following detailed description of preferred embodiments of the invention, provided with reference to the enclosed drawings and given as an indication and not for limiting purposes.

In particular, the attached drawings are included to provide a further understanding of the invention and are incorporated in and constitute a part of this specification. The drawings together with the description explain the principles of the invention. In the drawings, corresponding characteristics and/or components are identified by the same reference numbers. In these drawings:
- FIG. 1 schematically shows a heat pump laundry dryer in a preferred embodiment of the present invention;
- FIG. 2 shows pressure curves for an exemplary drying process of laundry employing the blended refrigerant and pressure curves for the same drying process employing the refrigerant R134a;
- FIG. 3 shows the pressure ratios of the pressures drawn in FIG. 2;
- FIG. 4 shows temperature curves of the drying medium at various locations in the heat pump unit for the blended refrigerant and the refrigerant R134a for the drying process according to FIG. 2.

### Detailed description of the invention

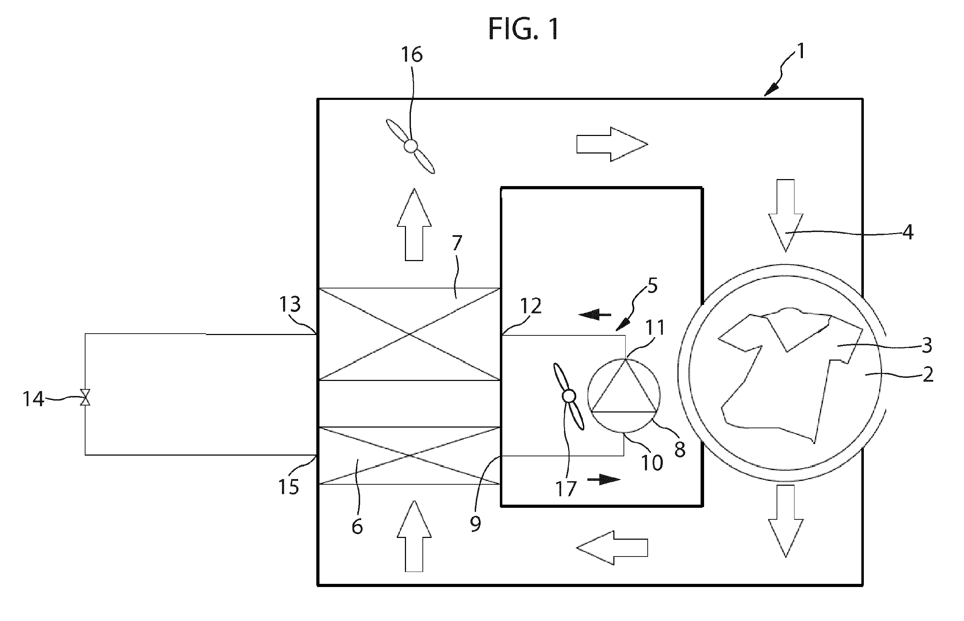

FIG. 1 schematically shows a heat pump laundry dryer 1 according to a preferred embodiment of the invention. It is emphasized that although in the following description a heat pump laundry dryer is considered, this choice is merely exemplary because the present invention applies also to combined laundry washers/dryers equipped with a heat pump for heat exchange with an article drying medium.

The heat pump laundry dryer 1 comprises a drying chamber, preferably a rotatable drying drum 2. In operation, the drying drum 2 accommodates wet laundry 3 to be dried. For adequately drying the laundry 3, a drying medium 4 which according to the present invention is air, in particular ambient air, is circulated through the drying drum 2 via a drying medium circuit, which preferably forms a closed-loop circuit.

For drying the laundry 3, the drying medium 4 is heated to a temperature of 100°C at the most and thereby has a comparatively low relative humidity. It is fed into the drying drum 2 and impinges the wet laundry 3. As a consequence, humidity of the wet laundry 3 is absorbed by the drying medium 4 thereby drying the laundry 3. As the laundry 3 in the drying drum 2 generally has a temperature below that of the drying medium 4 entering the drying drum 2, the drying medium 4 also cools down, for example to a temperature of about 30°C.

After having passed through the drying drum 2, the drying medium 4, having a comparatively high relative humidity, exits the drying drum 2 and is further cooled down to condense excess humidity therefrom. After that, the drying medium 4 is recirculated through the drying drum 2. Before re-entering the drying drum 2, the drying medium 4 is heated up again, thereby reducing its relative humidity.

For dehumidifying and reheating the drying medium 4, the heat pump tumble dryer 1 comprises a heat pump unit 5. The heat pump unit 5 exemplarily comprises two heat exchangers, namely a heat exchange medium evaporator 6 and a heat exchange medium liquefier 7. Hereinafter, the term "refrigerant" will also be used as a synonym of the term "heat exchange medium". Furthermore, preferably a fan 16 is provided.

The heat pump unit 5 or heat pump system further comprises a compressor 8 interconnected between the refrigerant evaporator 6 and the refrigerant condenser or liquefier 7. A refrigerant evaporator outlet 9 is connected to a compressor inlet 10 and a compressor outlet 11 is connected to a refrigerant liquefier inlet 12. A refrigerant liquefier outlet 13 is connected via a throttling element 14, a capillary for example or a thermostatic valve or an electronic expansion valve, to a refrigerant evaporator inlet 15.

By the heat pump unit 5, heat is transferred from the refrigerant evaporator 6 to the refrigerant liquefier 7. The refrigerant, which will be specifically described below, acts as a heat exchange medium, circulated in the heat pump unit closed circuit and is heated up at the refrigerant evaporator 6 and cooled down at the refrigerant liquefier 7, The relatively low temperature at the refrigerant evaporator 6 is used to cool down and to dehumidify the drying medium 4 so as to condensate humidity, i.e. to dehumidify the drying medium 4 exiting the drying drum 2. The elevated temperature at the refrigerant liquefier 7 is used to reheat the drying medium 4 which in turn is then fed to the drying drum 2 for drying the laundry 3.

The heat pump unit 5 may further comprise auxiliary heat exchangers for further optimizing energy efficiency. For example, an auxiliary refrigerant evaporator and an auxiliary refrigerant liquefier may be provided. The number of auxiliary refrigerant heat exchangers can be varied from one to nearly any arbitrary number. An auxiliary refrigerant evaporator may be used to speed up the heat-up phase of the heat pump dryer and a refrigerant liquefier may be used to balance the excess of energy of the heat pump laundry dryer 1.

The direction of refrigerant flow is indicated in FIG. 1 by small arrows, whilst the flow of the drying medium 4 is indicated by larger and broader arrows. The heat pump laundry dryer 1 may comprise a fan 16 adapted to and designed for circulating the drying medium 4 within the heat pump tumble dryer circuit.

During the circulation of the refrigerant in the heat pump unit 5, it undergoes temperature changes as well as pressure changes. Especially the differences in pressure between the compressor inlet 10 and the compressor outlet 11 lead to mechanical stress and strain on the components.

Applicant has found a refrigerant which reduces the stress on the compressor while at the same time essentially allowing maintaining the drying performance of common refrigerants in terms of the drying air temperature.

This refrigerant according to the invention, which is henceforth also called "blended refrigerant" is a blend of 1,1,1,2-Tetrafluoroethane and 1,3,3,3-Tetrafluro-1-propene, wherein said refrigerant has a percentage of 42 % of 1,1,1,2-Tetrafluoroethane and a percentage of 58 % of 1,3,3,3-Tetrafluro-1-propene. The glide of the blended refrigerant is in the present embodiment between 0.7 and 0.8 °C at a bubble temperature of about 20 °C and between 0.6 and 0.7°C at a bubble temperature of about 60 °C. In an even more preferred embodiment, the glide of the blended refrigerant is 0.787 °C at a bubble temperature of about 20 °C and 0.688°C at a bubble temperature of about 60 °C

The temperatures are lying in a range of +/- 2 °C. The critical temperature of the blended refrigerant is about 102 °C with a range of +/- 5 °C, while the critical pressure is about 38 bar with a range of +/- 3 bar. The nominal boiling point is -24.9 °C with a range if +/- 4 °C, and the heat of vaporization at the nominal boiling point is 202.8 kJ/g with a range of +/- 50 kJ/kg.

According to the invention, the heat pump system including this blended refrigerant is designed to deliver a temperature of the drying air, which is used as the drying medium, at the condenser outlet 11 between 50-75 °C and to deliver a temperature of the drying air at the evaporator outlet of 25-45 °C. These temperature ranges should be fulfilled during the steady phase of a drying temperature in which temperatures and pressures essentially stay constant or vary only slightly. The steady phase is usually the second phase of the drying process as will be discussed below.

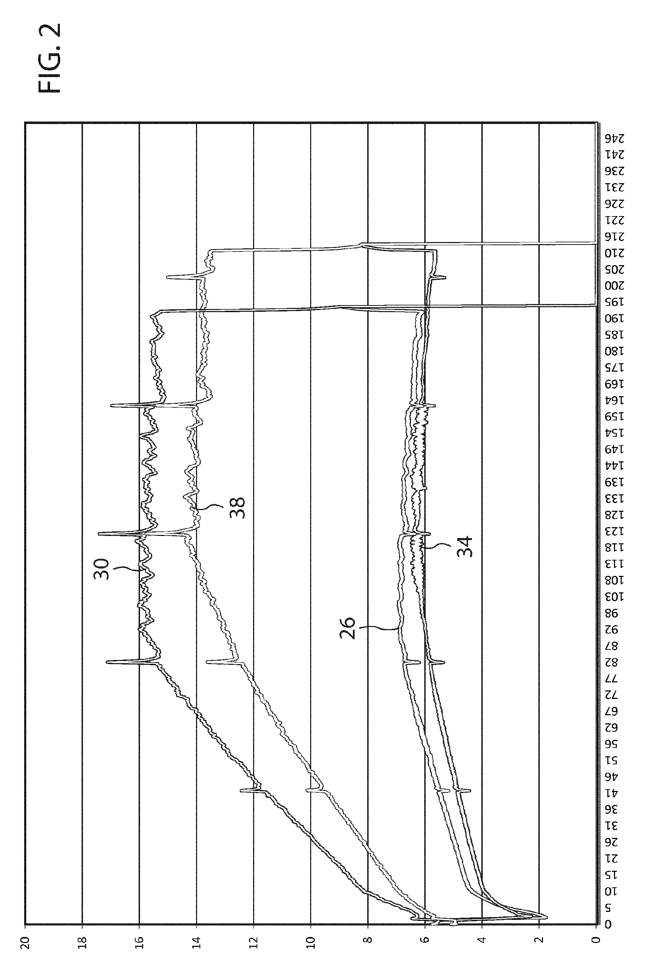

In FIG. 2, for the blended refrigerant and the refrigerant R134a (1,1,1,2-Tetrafluoroethane), the low pressure at the compressor inlet 10 and the high pressure at the compressor outlet 11 are plotted as a function of time during an exemplary drying process of laundry. The pressures are plotted in the unit of bar. The time is plotted in the unit of minutes. The drying process can be divided for convenience into two stages, which will be discussed below. This division in two phases is used only for discussion purposes and by no means is the only possible way to divide up the drying process.

A curve 26 plotted in FIG. 2 indicates the low pressure of the common refrigerant as a function of time. After a brief period of time in which the curve 26 drops and then stabilizes, a first or transitional phase begins during which the laundry dryer 1 is brought to an operative level and in which the low pressure of the common refrigerant steadily rises. In a subsequent second phase, which is the steady phase of the drying process, the low pressure is essentially staying constant and is only slowly decreasing. During this steady phase, the temperature of the drying air is essentially maintained at the same predefined and desired value or is kept in a defined temperature band; preferably a minimum and a maximum value for the reached temperatures during the steady phase are defined. The choice of the temperature during the drying phase can depend on many factors, i.e. the laundry load or parameters the selected laundry treatment program.

A fan 17 is provided for balancing the heat pump system, which is a closed system. Alternatively or in combination to operating fan 17 for cooling the compressor 8, the speed or frequency with which the compressor is driven can be varied, especially reduced.

With these technical means, the drying air temperature is kept at the desired value or in the desired range during the steady phase of the drying process. Eventually, the condensing pressure is going down while the evaporator pressure is increasing at the end of the drying process in which the heat pump is deactivated and the compressor is stopped.

A curve 30 indicates the high pressure of the refrigerant R134a as a function of time during this drying process. The overall behavior of this curve 30 is in its features similar to the behavior of the curve 26, with the main difference that the pressure values as well as the slopes of the curves are larger than the ones of curve 26.

A curve 34 indicates the low pressure of the blended refrigerant in a drying process in which all conditions - except the choice of the refrigerant - are identical to the drying process in which curves 26, 30 for the refrigerant R134a have been determined. Especially the same components in the heat pump are used, allowing a direct comparison of the performance of the two refrigerants. As can be inferred from curve 34, the low pressure of the blended refrigerant is generally smaller than the low pressure of R134a. Its general behavior regarding an initial increase, rather constant or steady phase and the drop, however, is similar to the one of R134a due to the identical drying process.

A curve 38 indicates the development of the high pressure of the blended refrigerant. As can be inferred from curve 38, the high pressure of the blended refrigerant is increasing more slowly during the second phase of the drying process compared to R134a. Moreover, the second phase in which the high pressure is increasing with an essentially constant slope lasts longer then in the case of the refrigerant R134a. The maximum value reached of the high pressure of the blended refrigerant - not including the spikes - is ca. 12.5 % smaller than the maximum value of the high pressure of the refrigerant R134a.

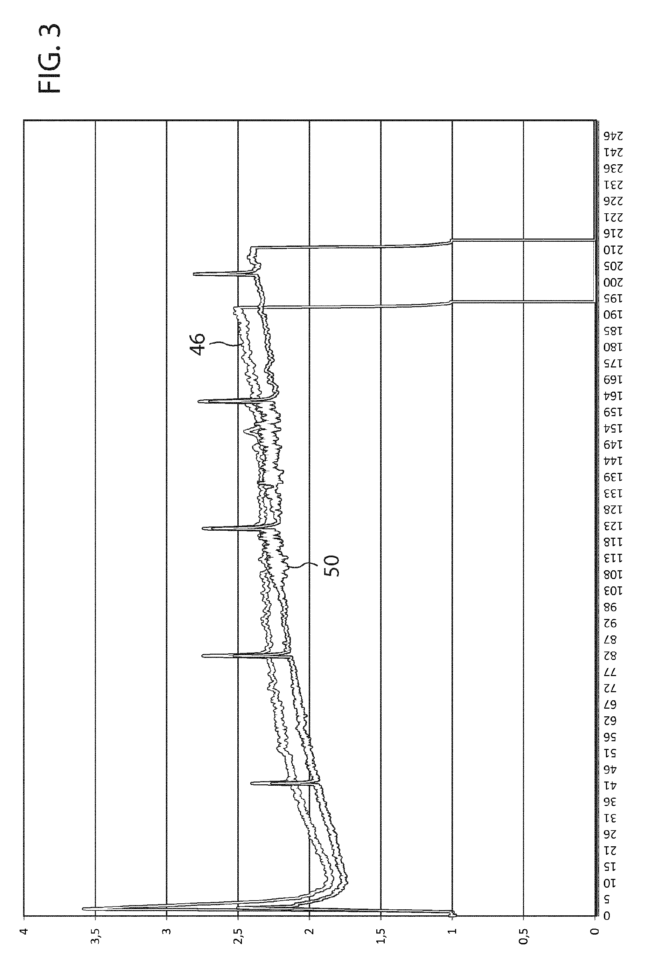

A quantity which is a significant indicator for strain and stress acting on the compressor during a drying process as discussed above is the pressure ratio between the high pressure at the outlet 11 and the low pressure at the inlet 10 of the compressor. For the refrigerant R134a, this pressure ratio is indicated in FIG. 3 by curve 46; for the blended refrigerant, it is indicated in FIG. 3 by curve 50. By comparing both curves 46, 50, one can infer that essentially during the whole drying process, the pressure ratio is smaller, approximately 10% smaller, for the blended refrigerant compared to the pressure ratio of the refrigerant R134a. This smaller pressure ratio results in reduced stress and strain on the compressor, increasing its lifetime. It also allows to down-size the compressor and still to maintain the desired drying performance.

The use of the blended refrigerant thus leads to less component stress in the heat pump unit while simultaneously maintaining the drying performance in terms of the temperature of the drying medium which according to the invention is air.

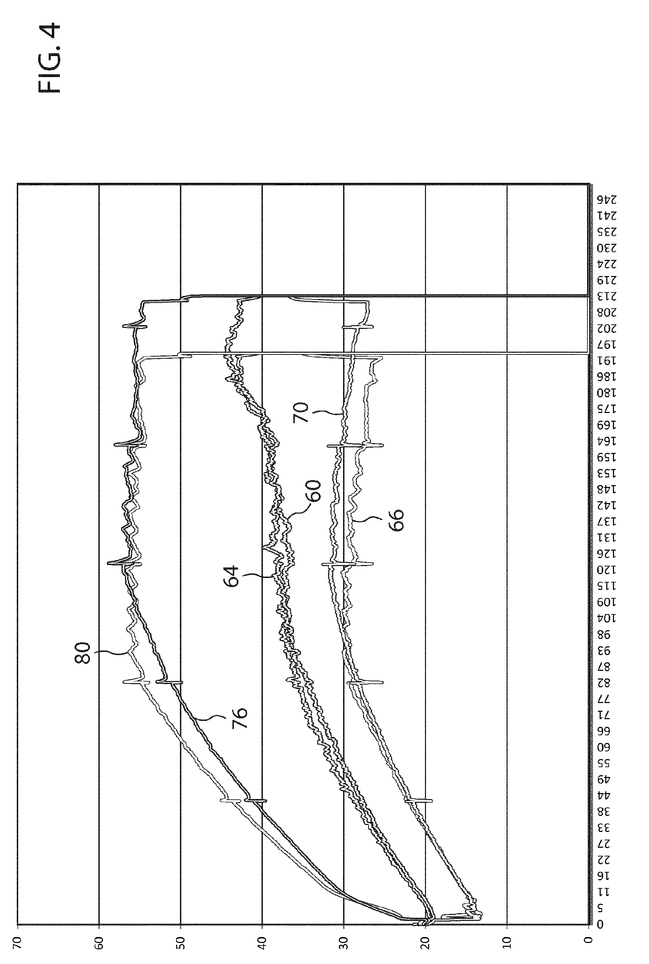

In FIG. 4, the temperatures of the drying air are plotted at various locations of the heat pump unit for both the refrigerant R134a and the blended refrigerant. A curve 66 shows the drying air temperature in ° C as a function of time at the evaporator outlet for R134a, while a curve 70 shows the drying air temperature at the evaporator outlet for the blended refrigerant. The temperature in the second phase of the drying process is a bit larger for R134a, while in the third phase or steady phase, the temperature is somewhat larger in the case of the blended refrigerant.

A curve 60 shows the drying medium temperature of the refrigerant R134a at the evaporator inlet, while a curve 64 shows the corresponding temperature for the blended refrigerant. In the second phase of the drying process, the drying air temperature is a bit larger for R134a, while in the third phase or steady phase, the temperature is partly somewhat larger or essentially equal to in the case of the blended refrigerant.

Since the drying air temperature is an essential indicator for and factor of the drying performance, one can infer from the temperature comparison according to FIG. 4 that the drying performance is essentially maintained by exchanging the refrigerant R134a by the blended refrigerant.

## Claims

1. Household appliance (1) for drying laundry, comprising a heat pump system (5), the heat pump system comprising a refrigerant loop, said appliance comprising
- a laundry treatment chamber (2) for drying laundry using air as a drying medium (4);
- a first heat exchanger which is built as an evaporator (6) comprising an evaporator outlet (9) for heating a refrigerant and cooling the drying medium;
- a second heat exchanger which is built as a condenser (7) for cooling said refrigerant and heating the drying medium;
- an refrigerant expansion device (14) arranged in said refrigerant loop between said second heat exchanger and said first heat exchanger and
- a compressor (8) comprising a compressor outlet (11) arranged in said refrigerant loop between said first heat exchanger and said second heat exchanger,
**characterized in that**
said refrigerant is a blend of 1,1,1,2-Tetrafluoroethane and 1,3,3,3-Tetrafluro-1-propene and that the temperature of the drying air at said condenser outlet is between 50-75°C and that the temperature of the drying air at said evaporator outlet (9) is between 25-45°C.

2. Household appliance (1) according to claim 1, wherein said temperature of the drying air at said condenser outlet is between 55-65°C.

3. Household appliance (1) according to claim 1 or 2, wherein said temperature of the drying air at said evaporator outlet (9) is between 25-35°C.

4. Household appliance (1) according to one of the claims 1 to 3, wherein said refrigerant has a percentage between 37 % and 47 % of 1,1,1,2-Tetrafluoroethane and a corresponding percentage between 63 % and 53 % of 1,3,3,3-Tetrafluro-1-propene.

5. Household appliance (1) according to claim 4, wherein said refrigerant has a percentage of 42 % of 1,1,1,2-Tetrafluoroethane and a percentage of 58 % of 1,3,3,3-Tetrafluro-1-propene.

6. Household appliance(1) according to one of the claims 1 to 5, wherein said refrigerant has a glide between 0.5°C and 1 °C at a bubble temperature between 18 °C and 22 °C and a glide between 0.5°C and 1 °C at a bubble temperature between 58 °C and 62 °C.

7. Household appliance(1) according to claim 6, wherein said refrigerant has a glide of 0,787 °C at a bubble temperature between 18 °C and 22 °C and a glide of 0,688 °C at a bubble temperature between 58 °C and 62 °C.

8. Household appliance (1) according to one of the claims 1 to 7, wherein said refrigerant has a critical temperature between 97 °C and 107 °C.

9. Household appliance (1) according to claim 8, wherein said refrigerant has a critical temperature of 102 °C.

10. Household appliance (1) according to one of the claims 1 to 9, wherein said refrigerant has a critical pressure between 35 bar and 41 bar.

11. Household appliance (1) according to one of the claims 1 to 10, wherein said refrigerant has a nominal boiling point between -24°C and -29 °C.

12. Household appliance (1) according to claim 10 or 11, wherein said refrigerant has a heat of vaporization at its nominal boiling point between 150 kJ/kg and 250 kJ/kg.

13. Household appliance (1) according to claim 12, wherein said refrigerant has a heat of vaporization at its nominal boiling point of essentially 202,8 kJ/kg.

14. Household appliance (1) according to any of the preceding claims, comprising a closed-loop circuit wherein said drying medium circulates.

15. Household appliance (1) according to the any of the preceding claims which is built as a tumble dryer.
